# EUROPEAN PATENT APPLICATION

(11) **EP 0 649 879 A2**
(43) Date of publication of application: **26.04.1995**
(21) Application number: 94307723.0
(22) Date of filing: 20.10.1994
(51) Int. Cl.: C08L 83/04, C08K 9/06, C08K 9/04

(54) **High tear strength silicone compositions**

(30) Priority: 26.10.1993 US 143429
(71) Applicant: DOW CORNING CORPORATION, Midland, Michigan 48686-0994 (US)
(72) Inventor: Hagen, Peter, Harbor Springs, Michigan (US); Hagen, Matthias, Harbor Springs, Michigan (US)
(74) Representative: Bullows, Michael

(57) **Abstract**

Silicone compositions which contain reinforcing silica filler whose surface is treated with hexamethyldisilazane and stearated precipitated calcium carbonate exhibit high tear strength compared to similar compositions which do not contain that combination of fillers. The silicone compositions can be silicone sealant compositions. The viscosity of the silicone sealant composition maintains a value which allows the sealant composition to be readily extruded. The silicone sealant composition which further contains a small amount of ground calcium carbonate exhibits enhanced adhesion of cured silicone sealant to other cured silicone sealant when mated.

## Description

This invention relates to curable filled silicone compositions which cure or vulcanize at room temperature.

Silicone materials are well known in the art and are made from a variety of ingredients to provide a multitude of different properties. One class of silicone materials are those which cure at room temperature, especially the silicone sealants which cure via silicon-bonded hydrolyzable groups. These sealants are available in many kinds of delivery forms, such as one package products which are stable in the package but cure when extruded from the package and exposed to atmospheric moisture; two package products which cure at room temperature when the contents of the two packages are mixed; and packaged in dispersion form such as organic solvent dispersions and aqueous latexes. Although many kinds of silicone sealants are useful for various applications, improvements in many of their physical and chemical properties are sought. One such property is tear strength. Many applications in which silicone sealants are used, do not require a substantial tear strength. However, there are other applications in which tear strength is an important characteristic. Without high tear strengths, these materials would not be candidates for such applications. Silicone sealants are known to have rather low tear strengths compared to many other materials, but because they have many other valuable properties, they are highly desirable if the tear strengths could be increased.

One approach to achieving high tear strengths is to use high concentrations of reinforcing fillers, such as silica fillers like fumed silica, both untreated and treated. However, as the concentration of the silica filler is increased in the sealant composition, the viscosity increases substantially and one experiences stiff and difficult to extrude compositions even if rather low viscosity polydiorganosiloxanes are used as base polymers. For this reason, many kinds of approaches have been used to achieve high tear strength but in each case it seems that other properties which make the silicone sealant so desirable are compromised.

Therefore, it is an object of this invention to achieve a silicone composition which cures to a high tear strength product while also maintaining other valuable characteristics.

This invention provides a silicone composition comprising a curable polydiorganosiloxane composition, a reinforcing silica filler treated with hexamethyldisilazane and stearated precipitated calcium carbonate filler, characterized in that the amount of the reinforcing silica filler does not exceed 25 weight percent of the silicone composition.

Silicone compositions which cure to high tear strength products and still are relatively extrudable in the uncured state, are obtained by using a combination of fillers. The high tear strength is obtained by using either precipitated or fumed reinforcing silica filler whose surface is treated with hexa-methyldisilazane, preferably the treatment is in excess. The amount of this silica filler does not exceed 25 weight percent of the silicone composition. The preferred silica filler for this invention is precipitated reinforcing silica filler whose surface is treated with an excess of hexamethylsilazane and is present in an amount of less than 25 weight percent based on the weight of the silicone composition. If more than 25 weight percent precipitated silica filler is used, the extrudability of the silicone composition is substantially reduced and the cost of the final product increases beyond acceptable amounts for many applications. However, when stearated precipitated calcium carbonate is used along with the reinforcing silica filler, high tear strengths are obtained and easy extrudability of the silicone composition is observed without using more than 25 weight percent silica filler in the silicone composition while maintaining acceptable costs. The amount of the precipitated calcium carbonate is an amount which enhances the tear strength of the cured product when in combination with the hexamethyldisilazane treated reinforcing silica filler. The filler combination, based on the weight of the silicone composition, is preferably from 15 to 30 weight percent stearated precipitated calcium carbonate filler and from 5 to 20 weight percent of precipitated reinforcing silica filler.

The reinforcing silica filler is treated with hexamethyldisilazane, preferably in amounts which are in excess of that amount which is needed to react with the available hydroxyl groups on the silica surface. By available hydroxyl groups, we mean those which are measurable by tests for that purpose. The moisture content of the silica contributes to the total available hydroxyl groups.

These reinforcing silica fillers can be obtained commercially and are those which have surface areas of greater than 50 m²/g, preferably greater than 100 m²/g. An example of a precipitated silica filler is the commercially available Tullanox™ HM-100, available from Tulco, Inc, of Ayer, Massachusetts. An example of a fumed silica filler whose surface is treated with hexamethyldisilazane is H-2000 sold by Wacker Chemie, Munich, Germany.

The precipitated calcium carbonates of this invention are treated with stearate, such as calcium stearate and stearic acid. Such precipitated calcium carbonates are commercially available and are known as Winnofil™ SPM having a surface area of 22 m²/g, a stearate content of 2.8 weight percent and sold by ICI, Runcorn, U.K.; Calofort™ S having a surface area of 24 m²/g, a stearate content of 3.0 weight percent and sold by J. E. Sturge, Ltd, Birmingham, U.K.; and Socal™ U₁S₂ having a surface area of 20 m²/g, a stearate content of 2.4 to 3.0 weight percent and sold by Solvay and Company, Brussels, Belgium. These precipitated calcium carbonates preferably have an average particle size of less than 0.1 micrometer. These precipitated calcium carbonates in combination with the stated amount of hexamethyldisilazane treated silica filler, preferably hexamethyldisilazane treated precipitated silica filler, provide the high tear strengths in the cured products and give to the silicone composition the ability to be readily extruded and at the same time keeping the cost reasonable according to the markets in which they are used. If ground calcium carbonate is used in place of the precipitated calcium carbonate, the high tear strengths are not obtained.

By the addition of small amounts of ground calcium carbonate to sealant compositions which contain the combination of the silica filler and precipitated calcium carbonate, the adhesion of the cured sealant of this invention to other cured sealants against which they are mated is enhanced. The ground calcium carbonates preferably used in this invention have an average particle size in the range of from 1 to 5 micrometers. The adhesion enhancing amount of the ground calcium carbonate is preferably from 1 to 5 weight percent based on the weight of the silicone sealant composition. The ground calcium carbonate may be either untreated or treated with stearic acid. Examples of ground calcium carbonate fillers include those which are commercially available such as Carbital™ 90S having a surface area of 12 m²/g, a stearate content of 1.0 weight percent and sold by English China Clay International™, St. Austell, U.K.; and Polycarb™ S and Polycarb™ SB both having a surface area of 8 m²/g, a stearate content of 0.9 weight percent and sold by English China Clay International™, St. Austell, U.K.

The silicone compositions of this invention are based on a curable polydiorganosiloxane composition in combination with reinforcing silica filler whose surface is treated with hexamethyldisilazane and stearated precipitated calcium carbonate. Although the silicone compositions of this invention are preferably silicone sealant compositions, it is expected that other cure systems would exhibit the same high tear strengths achieved by the silicone sealant compositions described here in detail. Silicone compositions which are based on curable polydiorganosiloxane where it contains alkenyl unsaturation, such as silicon-bonded vinyl and which are cured through platinum catalyzed addition of silicon compounds having silicon-bonded hydrogen atoms, would be expected to exhibit improved tear strengths. Curable polydiorganosiloxane compositions which are cured through the use of heat activated organic peroxides would also be expected to exhibit improved tear strengths.

The silicone compositions of this invention are preferably silicone sealant compositions which comprise a curable polydiorganosiloxane and the filler combination. These curable polydiorganosiloxane compositions are those comprising a polydiorganosiloxane with hydroxyl endgroups or endgroups which have silicon-bonded hydrolyzable groups, hydrolyzable silicon compounds which are crosslinkers and optionally catalysts which enhance the curing characteristics of the silicone sealant compositions.

The polydiorganosiloxanes for the silicone sealant compositions are those which can be represented by the general formula

HO(R₂SiO)ₙH and XₐR₍₃₋ₐ₎SiO(R₂SiO)ₙSiR₍₃₋ₐ₎Xₐ

in which X is a hydrolyzable group, R is a monovalent hydrocarbon radical, a is 1, 2, 3, and n has an average value such that the viscosity is from 1 to 500 Pa·s. The hydrolyzable group, X, can be any of those which react with water (moisture) and are hydrolyzed, such as alkoxy, acyloxy, ketoximo (oximo), N-methylbenzamido and alkenyloxy. Examples of monovalent hydrocarbon radicals include alkyl, such as methyl, ethyl, propyl, butyl, isoproyl and octyl; alkenyl such as vinyl, allyl and hexenyl; cycloalkyl such as cyclopentyl and cyclohexyl; aryl such as phenyl, tolyl and xylyl; and aralkyl such as 2-benzylethyl. The value of n is preferably one which provides a viscosity of from 100 to 500 Pa·s and, more preferably, from 100 to 400 Pa·s.

The kind of polydiorganosiloxane endgroup depends, for the most part, upon the kind of delivery form used and the kinds of hydrolyzable groups of the crosslinker compound. One preferred kind of curable polydiorganosiloxane composition is one which is comprised of a hydroxyl terminated polydiorganosiloxane, a polyalkoxysilicon crosslinker and a catalyst to enhance the cure of the curable polydiorganosiloxane. In such compositions, the hydroxyl terminated polydiorganosiloxane is preferably a hydroxyl terminated polydimethylsiloxane, the polyalkoxy-silicon crosslinker is tetra(n-propyl) orthosilicate and the catalyst is a tin catalyst. These preferred curable polydiorganosiloxanes are preferably in a two package delivery form wherein one package comprises the polydiorganosiloxane and fillers and a second package comprises the polyalkoxysilicon crosslinker and the catalyst. In the case of the preferred curable polydiorganosiloxanes, the two package composition is where one package comprises hydroxyl terminated polydimethylsiloxane and fillers and the second package comprises tetra(n-propyl) orthosilicate and the tin catalyst.

Examples of the polyalkoxysilicon compound include tetraalkyl orthosilicate such as tetraethyl orthosilicate, tetra-n-propyl orthosilicate, tetraisopropyl orthosilicate and tetrabutyl orthosilicate; alkylpolysilicate such as ethylpolysilicate, n-propylpolysilicate and butylpolysilicate; and other polyalkoxysilicon compounds.

Examples of tin catalysts which enhance the cure characteristics of the curable polydiorganosiloxane include dibutyltin dilaurate, dibutyltin diacetate, stannous octoate and stannous 2-ethylhexanoate, to name a few.

Other silicone sealant compositions can be prepared from the above described curable polydiorganosiloxanes for sealants, hydrolyzable silicon compound crosslinkers and curing catalysts if necessary. The hydrolyzable silicon compound crosslinkers contain at least two hydrolyzable groups per molecule and preferably three or four. The hydrolyzable groups include acyloxy groups such as acetoxy, octanoyloxy and benzoyloxy; ketoximo groups such as dimethylketoximo, methylethylketoximo and diethylketoximo; alkenyloxy groups such as isopropenyloxy and 1-ethyl-2-methylvinyloxy; amino groups such as dimethylamino, butylamino, diethylamino and cyclohexylamino; aminoxy groups such as dimethylaminoxy and diethylaminoxy; and amido groups such as N-methylacetamido, N-ethylacetamido and N-methylbenzamido.

Curing catalysts for enhancing the curing characteristics of the silicone sealant composition, especially to accelerate the crosslinking reactions which are condensation type reactions. Examples of curing catalysts include the metal salts of carboxylic acid such as the diorganotin carboxylates described above and other metal carboxylates in which the metal atoms may include iron, cobalt, manganese and zinc; organotitanate and chelated titanates such as tetrabutyltitanate, tetra(isopropyl)-titanate, tetra(2-ethylhexyl)titanate, diisopropoxy-bis-(acetoacetonate)titanium and others.

The silicone compositions of this invention can also contain other fillers as long as they do not interfere with the improvement in the tear strengths. Such fillers may include quartz, diatomaceous earth, iron oxide, titanium dioxide, aluminum oxide, carbon black, graphite, glass beads, glass microballoons, carbon fibers, silicon carbide, polystyrene beads and metal fibers.

Other additives commonly used in silicone sealants can be used in the silicone sealant compositions of this invention, such as colorants or pigments and dyes, fungicides, solvents, adhesion promoters, anti-oxidants, cure regulators, plasticizers such as silicone fluids, for example, trimethylsiloxy endblocked polydimethylsiloxane having viscosities in the range of from 0.01 to 1 Pa·s at 25°C. and pacifiers such as low molecular weight silanol polyorganosiloxanes and the like.

The following examples are presented for illustrative purposes. "Part" or "parts" are parts by weight unless otherwise specified and viscosities were measured at 25°C.

### Example

A two package silicone sealant composition was prepared. A first composition was prepared by adding to a change can mixer 20.2 parts of hydroxyl terminated polydimethylsiloxane having a viscosity of 350 Pa·s, 20.2 parts of hydroxyl terminated polydimethylsiloxane having a viscosity of 150 Pa·s, 18.9 parts of trimethylsiloxy endblocked polydimethylsiloxane having a viscosity of 0.1 Pa·s and 0.2 part of hydroxyl terminated polydimethylsiloxane having a silicon-bonded hydroxyl content of 4.0 weight percent. The polymers were mixed to homogeneity and then was added 10.1 parts of precipitated silica filler having a surface treated with hexamethyldisilazane and an average particle size of 0.3 micrometers and a surface area of 125 m²/g, 27 parts of Winnofil™ SPM which was a precipitated calcium carbonate treated with stearic acid having a surface area of 22 m²/g and 3.4 parts of ground calcium carbonate having an average particle size of 2-3 micrometers. The polymer and filler combination was mixed until the filler was thoroughly dispersed.

A second composition was prepared by mixing to homogeneity under conditions to exclude moisture, 40 parts of tetra(n-propyl) orthosilicate, 40.5 parts of trimethylsiloxy terminated polydimethylsiloxane having a viscosity of 1 Pa·s, 4.5 parts of fumed silica filler, 8 parts of dibutyltin diacetate, one part of glacial acetic acid as a cure regulator and 6 parts of mineral spirits.

A silicone sealant composition was prepared by mixing 94 parts of the first composition and 6 parts of the second composition. The physical properties results were obtained by extruding the silicone sealant composition and allowing it to be exposed to the atmosphere for one month. Thereafter, tests to determine the tensile strength at break, the elongation at break and the modulus at various elongation were done in accordance with ASTM D412. The tensile strength and modulus were reported in the following table in Pa (pascals) and the tear strength was as determined by the procedure ASTM D624 Tear Die B and was reported in kilonewtons per meter (kN/m).

**TABLE**

| PROPERTY | VALUE |
|---|---|
| TENSILE STRENGTH at break, MPa | 2.64 |
| ELONGATION at break, % | 708 |
| MODULUS at 10% elongation, MPa | 0.090 |
| MODULUS at 25% elongation, MPa | 0.172 |
| MODULUS at 50% elongation, MPa | 0.255 |
| MODULUS at 100% elongation, MPa | 0.421 |
| MODULUS at 200% elongation, MPa | 0.758 |
| MODULUS at 300% elongation, MPa | 1.010 |
| TEAR STRENGTH Die B, kN/m | 20.48 |

The tear strength of the above cured silicone sealant of 20.48 kN/m compares to a commercial silicone sealant, Dow Corning(R) 791 Perimeter Sealant having 45 weight percent stearated precipitated calcium carbonate filler, considered to have high tear strength sealant and wherein the tear strength is 14 kN/m. Therefore, the tear strength of a silicone sealant composition of this invention was more than 46% greater than previously considered high tear strength silicone sealants.

Tear strengths of a prior art silicone sealant composition is described in U.S. Patent No. 4,942,211, who show 4.0 N/mm (or kN/m) for tear propagation strengths as measure by ASTM D 624 Form B for a cured organopolysiloxane composition having 10.2 weight percent pyrogenic silica and 7.7 N/mm for tear propagation strength as measured by ASTM D 624 Form B for a cured organopolysiloxane composition having 46.3 weight percent Winnofil™ SP, a calcium carbonate.

## Claims

1. A silicone composition comprising a curable polydiorganosiloxane composition, a reinforcing silica filler treated with hexamethyldisilazane and stearated precipitated calcium carbonate filler, characterized in that the amount of the reinforcing silica filler does not exceed 25 weight percent of the silicone composition.

2. Use of the silicone composition according to claim 1 as a silicone sealant composition.

3. The silicone sealant composition in accordance with claim 2 in which the precipitated silica filler is, based on the weight of the silicone sealant composition, present in an amount of from 5 to 20 weight percent and the precipitated calcium carbonate is present in an amount of from 15 to 30 weight percent.

4. The silicone sealant composition in accordance with claim 3 in which the ground calcium carbonate has an average particle size of from 1 to 5 micrometers.

5. The silicone sealant composition in accordance with claim 3 further comprising an adhesion enhancing amount of ground calcium carbonate filler.

6. The silicone sealant composition in accordance with claim 5 in which the ground calcium carbonate is present in an amount of from 1 to 5 weight percent based on the weight of the silicone sealant composition.

7. The silicone sealant composition in accordance with claim 6 in which the curable polydiorganosiloxane composition comprises a hydroxyl terminated polydiorganosiloxane, a polyalkoxysilicon crosslinker and a catalyst to enhance the cure of the curable polydiorganosiloxane composition.

8. The silicone sealant composition in accordance with claim 7 in which the hydroxyl terminated polydiorganosiloxane is hydroxyl terminated polydimethylsiloxane, the polyalkoxysilicon crosslinker is tetra(n-propyl) orthosilicate and the catalyst is a tin catalyst.
